Europäisches Patentamt

European Patent Office

Office européen des brevets

(11) Publication number: **0 240 742**
**A2**

# (12) EUROPEAN PATENT APPLICATION

(21) Application number: 87103257.9

(51) Int. Cl.⁴: **G01N 33/49** , G01N 21/25

(22) Date of filing: 06.03.87

The title of the invention has been amended (Guidelines for Examination in the EPO, A-III, 7.3).

(30) Priority: 07.03.86 JP 49898/86
07.03.86 JP 49899/86

(43) Date of publication of application:
14.10.87 Bulletin 87/42

(84) Designated Contracting States:
BE DE FR GB NL SE

(71) Applicant: **TERUMO KABUSHIKI KAISHA trading as TERUMO CORPORATION**
**44-1, 2-chome, Hatagaya Shibuya-Ku**
**Tokyo 151(JP)**

(72) Inventor: **Kohno, Hiromasa**
**2517, Ohmiya**
**Fujinomiya-shi Shizuoka-ken(JP)**
Inventor: **Nudeshima, Masahiro**
**379-1, Nakajima-cho**
**Fujinomiya-shi Shizuoka-ken(JP)**

(74) Representative: **Henkel, Feiler, Hänzel & Partner**
**Möhlstrasse 37**
**D-8000 München 80(DE)**

(54) **Apparatus and method for measuring amount of oxygen in blood.**

(57) An apparatus for measuring the amount of oxygen in blood includes a light source for emitting light having at least two different wavelengths, a light intensity sensor for irradiating a blood with the light of each different wavelength from the light source, and for sensing the intensities of light, which correspond to the wavelengths, reflected from the blood, a calculating unit for calculating the average value of each reflected light intensity sensed by the light intensity sensor, a first arithmetic unit for selecting at least two of the average values and for determining the ratio thereof, a correcting unit for correcting the ratio on the basis of a correction value obtained from a relation between a reflected light intensity ratio of blood having a known degree of oxygen saturation and the known degree of oxygen saturation, and a second arithmetic unit for determining the degree of oxygen saturation of hemoglobin in the blood from the corrected ratio. The apparatus can also be used to calculate hemoglobin concentration from the intensity of light of a predetermined wavelength reflected from the blood, and to determine blood oxygen content from the degree of oxygen saturation of hemoglobin and the hemoglobin concentration. Methods of performing these operations are also disclosed.

F I G. 1 (a)

# APPARATUS FOR MEASURING AMOUNT OF OXYGEN IN BLOOD, AND METHOD OF PERFORMING SAME

## BACKGROUND OF THE INVENTION

This invention relates to an apparatus which utilizes the light absorption characteristics (reflection characteristics) of hemoglobin in blood to measure the degree to which the blood is saturated with oxygen, the concentration of hemoglobin and the oxygen content of the blood. The invention also relates to a method of performing such measurement.

A method and apparatus are available for measuring the degree of oxygen saturation in hemoglobin by utilizing the light absorption characteristics (absorption characteristics) of hemoglobin in blood. Generally, in the conventional approach, a blood sample is irradiated with light having two different wavelengths $\lambda_1$, $\lambda_2$, the intensity of the reflected light is measured, and the degree of saturation of oxygen is determined from the following equation:

$$OS = A + B(I_2/I_1) \quad ...(I)$$

where $I_1$, $I_2$ represent the intensities of the reflected light at the respective wavelengths $\lambda_1, \lambda_2$, and A, B are constants.

However, a problem with this conventional approach is that measurement of the degree of oxygen saturation is prone to error owing to the significant influence of blood-related physiological factors, especially hematocrit value (the proportion of blood occupied by red blood cells).

Measuring hemoglobin concentration in the prior art entails taking a blood sample, effecting hemolysis by physical or chemical means and introducing the result into a cuvette. The blood in the cuvette is then irradiated with light of a specific wavelength, the intensity of the transmitted light is measured and the hemoglobin concentration is calculated by using the Lambert-Beer law. A problem with this method is that it cannot be applied to in vivo measurement owing to the need for hemolysis. Another drawback is that a continuous measurement is difficult to perform.

## SUMMARY OF THE INVENTION

The present invention finds application in a method of determining the degree of saturation of oxygen in blood by irradiating a blood with light having two different wavelengths, converting the reflected light of the respective wavelengths into two electric signals conforming to the reflected intensities, and obtaining the degree of saturation from the ratio of the two reflected intensities.

An object of the present invention is to provide an apparatus for measuring oxygen saturation degree used in the above method, which apparatus determines the degree of oxygen saturation by using a correction wherein a predetermined constant is added to an electric signal on the denominator side, thereby minimizing the influence of the hematocrit value and making it possible to measure the degree of oxygen saturation more precisely through a very simple arrangement.

Another object of the invention is to provide a method of performing the abovementioned measurement.

A further object of the invention is to provide a hemoglobin concentration and blood oxygen content measuring apparatus, as well as the associated method, wherein the light absorption characteristics (reflection characteristics) of hemoglobin are utilized to measure the concentration of hemoglobin without hemolysis, thus making it possible to measure hemoglobin concentration continously in vivo or in vitro.

Still another object of the invention is to provide a hemoglobin concentration measuring apparatus, as well as the associated method, in which hemoglobin concentration can be accurately measured.

Still another object of the invention is to provide an oxygen content measuring apparatus, as well as the associated method, in which oxygen content can be measured based on the degree of saturation of oxygen and the concentration of hemoglobin.

According to the present invention, there is provided an apparatus for measuring the degree of saturation of oxygen in blood, comprising: a light-emitting source for emitting light having at least two different wavelengths,

light intensity sensing means for irradiating a blood with the light of each different wavelength from said light-emitting source, and for sensing the intensities of light, which correspond to said wavelengths, reflected from the blood, calculating means for calculating an average value of each reflected light intensity sensed by said light intensity sensing means,

first arithmetic means for selecting at least two of the average values and for determining the ratio thereof,

correcting means for correcting said ratio on the basis of a correction value obtained from a relation between a reflected light intensity ratio of blood having a known degree of oxygen saturation and said degree of oxygen saturation, and

second arithmetic means for determining a degree of saturation of oxygen in the blood from the corrected ratio.

The correcting means is adapted to apply a predetermined value to each of the reflected light intensity values in order to reduce the influence of the hematocrit.

According to the invention, a method of measuring the degree of saturation of oxygen in blood, comprising the step of irradiating a blood with light from a light-emitting source having at least two different wavelengths,

sensing the intensities of light, which correspond to said wavelengths, reflected from the irradiated blood, calculating an average value of each reflected light intensity sensed,

selecting at least two of the average values and determining the ratio thereof,

correcting said ratio on the basis of a correction value obtained from a relation between a reflected light intensity ratio of blood having a known degree of oxygen saturation and said degree of oxygen saturation, and

determining a degree of saturation of oxygen in the blood from the corrected ratio.

According to another aspect of the invention, there is provided an apparatus for measuring hemoglobin concentration comprising: a light-emitting source for emitting light having a predetermined wavelength,

light intensity sensing means for irradiating a blood sample with the light of the predetermined wavelength and for sensing the intensity of light reflected from the blood, and

concentration calculating means for calculating hemoglobin concentration from said intensity of reflected light.

Further, there is provided an blood oxygen content measuring apparatus comprising: a light-emitting source for emitting light having at least two different wavelengths,

light intensity sensing means for irradiating a blood with the light of each different wavelength from said light-emitting source, and for sensing the intensities of light, which correspond to said wavelengths, reflected from the blood,

·calculating means for calculating an average value of each reflected light intensity sensed by said light intensity sensing means,

first arithmetic means for selecting at least two of the average values and for determining the ratio thereof;

correcting means for correcting said ratio on the basis of a correction value obtained from a relation between a reflected light intensity ratio of blood having a known degree of oxygen saturation and said degree of oxygen saturation,

means for determining a degree of oxygen saturation of hemoglobin in the blood on the basis of the corrected ratio,

concentration calculating means for calculating hemoglobin concentration from one of said average values or reflected light intensities, and

means for determining blood oxygen content from said degree of blood saturation of hemoglobin and said hemoglobin concentration.

According to the invention, a method of measuring hemoglobin concentration comprising the steps of:

irradiating a blood with light from a light-emitting source for emitting light having a predetermined wavelength, and sensing the intensity of light reflected from the irradiated blood, and

calculating hemoglobin concentration based on the intensity of light reflected from the blood on the basis of an arithmetic relation derived from a relationship between intensity of light reflected from blood having a predetermined hemoglobin concentration and said predetermined hemoglobin concentration.

A method of measuring blood oxygen content in accordance with the invention comprising the steps of:

irradiating a blood with light from a light-emitting source having at least two different wavelengths,

sensing the intensities of light, which correspond to said wavelengths, reflected from the irradiated blood, calculating an average value of each reflected light intensity sensed,

selecting at least two of the average values and determining the ratio thereof,

correcting said ratio on the basis of a.correction value obtained from a relation between a reflected light intensity ratio of blood having a known degree of oxygen saturation and said degree of oxygen saturation,

determining a degree of oxygen saturation of hemoglobin in the blood on the basis of the corrected ratio,

3

selecting one of said average values or reflected light intensities and calculating hemoglobin concentration based thereon, and

determining the oxygen content of the blood from said degree of blood saturation of hemoglobin and said hemoglobin concentration.

Other features and advantages of the present invention will be apparent from the following description taken in conjunction with the accompanying drawings, in which like reference characters designate the same or similar parts throughout the figures thereof.

## BRIEF DESCRIPTION OF THE DRAWINGS

Figs. I(a), (b) and (c) are block diagrams illustrating embodiments of an apparatus according to the present invention;

Figs. 2(a), (b) are views showing a mechanism adapted to irradiate a blood with light and to sense the light reflected from the blood in accordance with the embodiments of the invention;

Fig. 3 is a flowchart illustrating a procedure for measuring the degree of oxygen saturation of a blood in accordance with an embodiment of the invention;

Figs. 4(a), (b) are graphs showing the relationship between a corrected ratio of reflected light intensity values (related reflectance) and the degree of saturation of oxygen in hemoglobin in accordance with an embodiment of the invention;

Figs. 5(a), (b) are graphs showing the light absorption (reflection) characteristics of blood;

Figs. 6(a), (b), (c) are graphs in which the relationship between reflected light intensity (related reflectance) at wavelengths of 665 nm, 795 nm and 9l0 nm, respectively, and the degree of oxygen saturation is plotted while varying the hematocrit value (HCT);

Fig. 7 is a plot showing the pronounced influence of the hematocrit value in a region of low oxygen saturation degree in the prior-art approach to measurement;

Fig. 8 is a plot showing the relationship between the degree of saturation of oxygen in hemoglobin and reflected light intensity (related reflectance);

Fig. 9 is a plot showing the relationship between hemoglobin concentration and reflected light intensity (related reflectance);

Fig. l0 is a plot showing the relationship between hemoglobin concentration and reflected light intensity (related reflectance) which has been corrected; and

Figs. ll(a), (b) show a flowchart illustrating a procedure for determining hemoglobin concentration and blood oxygen content in accordance with an embodiment of the invention.

## DESCRIPTION OF THE PREFERRED EMBODIMENTS

Preferred embodiments of the present invention will now be described in detail with reference to the accompanying drawings.

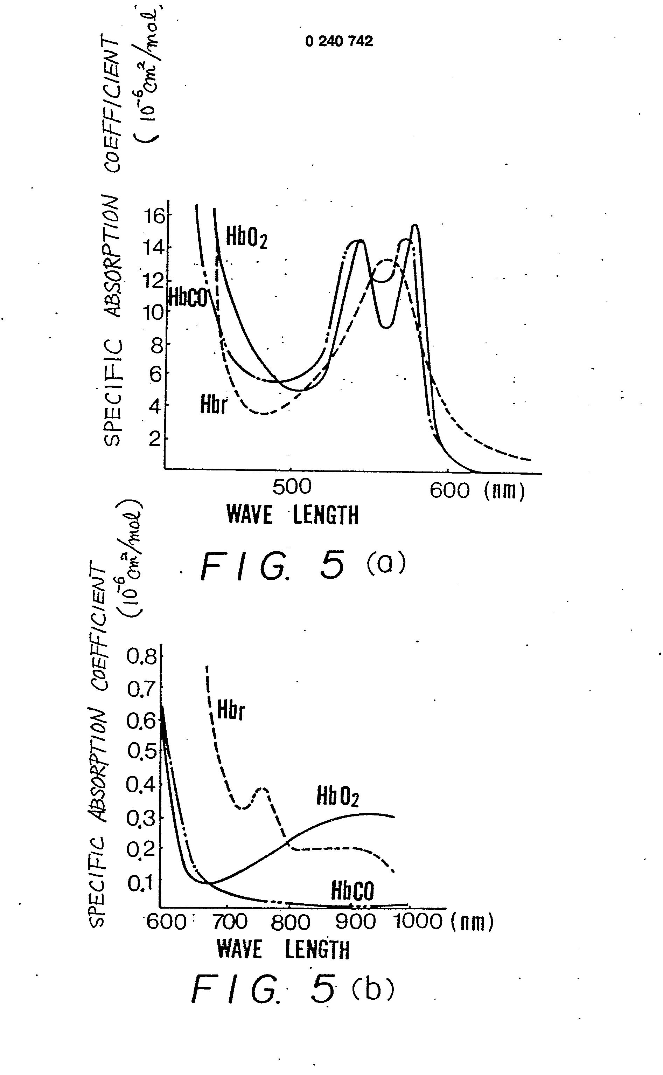

The light absorption (reflection) characteristics of blood vary depending upon absorption and scattering caused by pigments and particles contained in the blood. It may be understood from Figs. 5(a), (b) that these characteristics exhibit a large change depending upon the state of bonding between hemoglobin and oxygen and the wavelength of the light irradiating the blood. Hbr in these graphs represents reduced hemoglobin, $HbO_2$ represents oxygenated hemoglobin, and HbCO stands for carbonmonoxyhemoglobin.

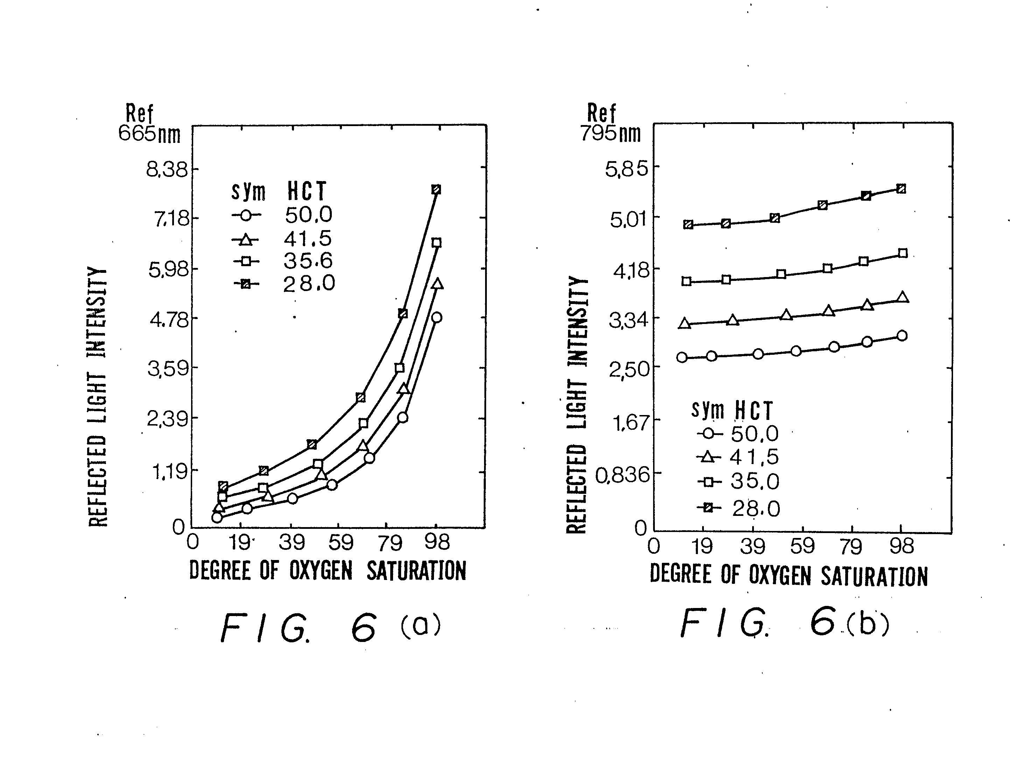

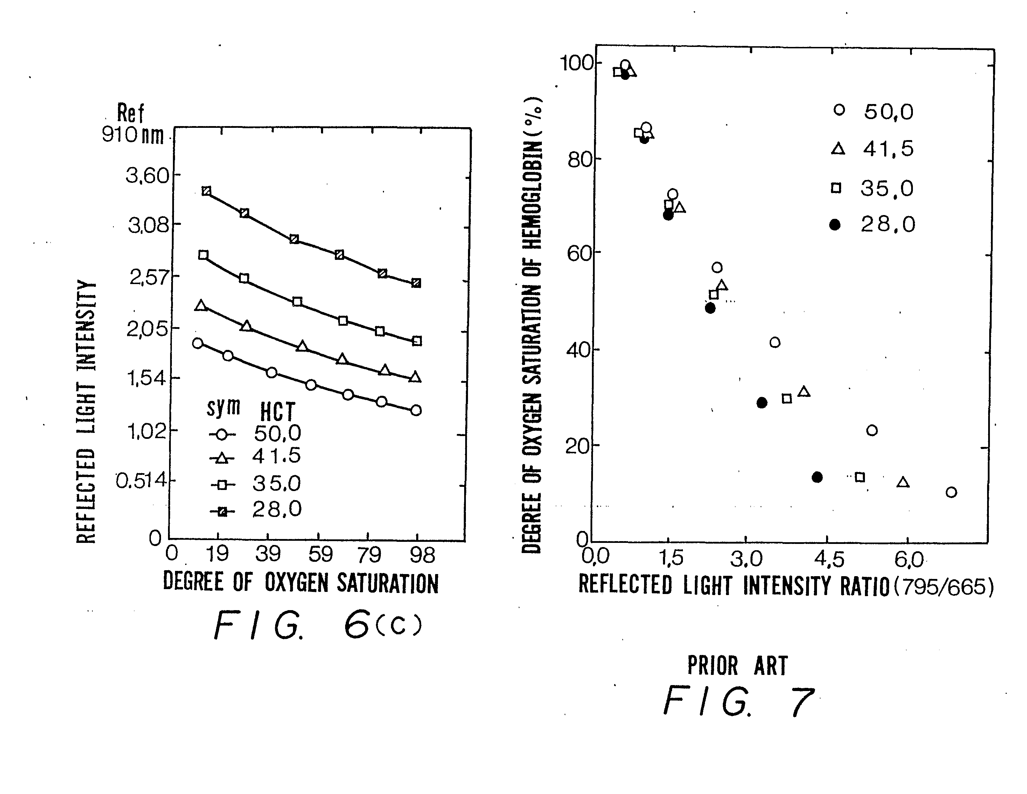

Figs. 6(a), (b), (c) are graphs in which the relationship between reflected light intensity at wavelengths of 665 nm, 795 nm and 9l0 nm, respectively, and the degree of oxygen saturation is plotted while varying the hematocrit value (HCT). It will appreciated from Fig. 6(a), where the reflected light has a wavelength of 665 nm, that reflected light intensity increases with a rise in the degree of oxygen saturation, the reason being that the absorbancy of oxygenated hemoglobin ($HbO_2$) is small in comparison with that of reduced hemoglobin (Hbr) at this wavelength. It will be understood from Fig. 6(b), where the reflected light has a wavelength of 795 nm, that a change in degree of oxygen saturation does not have much influence on the reflected light intensity. The reason for this is that the absorbancy of oxygenated hemoglobin ($HbO_2$) and that of reduced hemoglobin (Hbr) are substantially the same, i.e. they have nearly equal absorption points, at this wavelength. Fig. 6(c), where the reflected light has a wavelength of 9l0 nm, shows that reflected light intensity diminishes with a rise in the degree of oxygen saturation at this wavelength. This is the converse of the situation shown in Fig. 6(a) and stems from the fact that the absorbancy of oxygenated hemoglobin ($HbO_2$) is large in comparison with that of reduced hemoglobin (Hbr).

Figs. 6(a) - (c) also show that reflected light intensity increases with a decrease in the hematocrit value at each wavelength.

It should be noted that these measurements of reflected light intensity are results obtained upon previously calibrating each reflected light intensity to a predetermined value using a white reflector.

Fig. 7 shows the plot obtained when the relationship between the degree of oxygen saturation of hemoglobin and reflected light intensity ratio is found for each of the hematocrit values from the data of Figs. 6(a) - (c) based on the measured values at reflected light wavelengths of 665 nm and 795 nm in accordance with the conventional approach to measurement. It is seen that the hematocrit value has a profound influence in the region of low oxygen saturation and is a source of significant measurement error in such region.

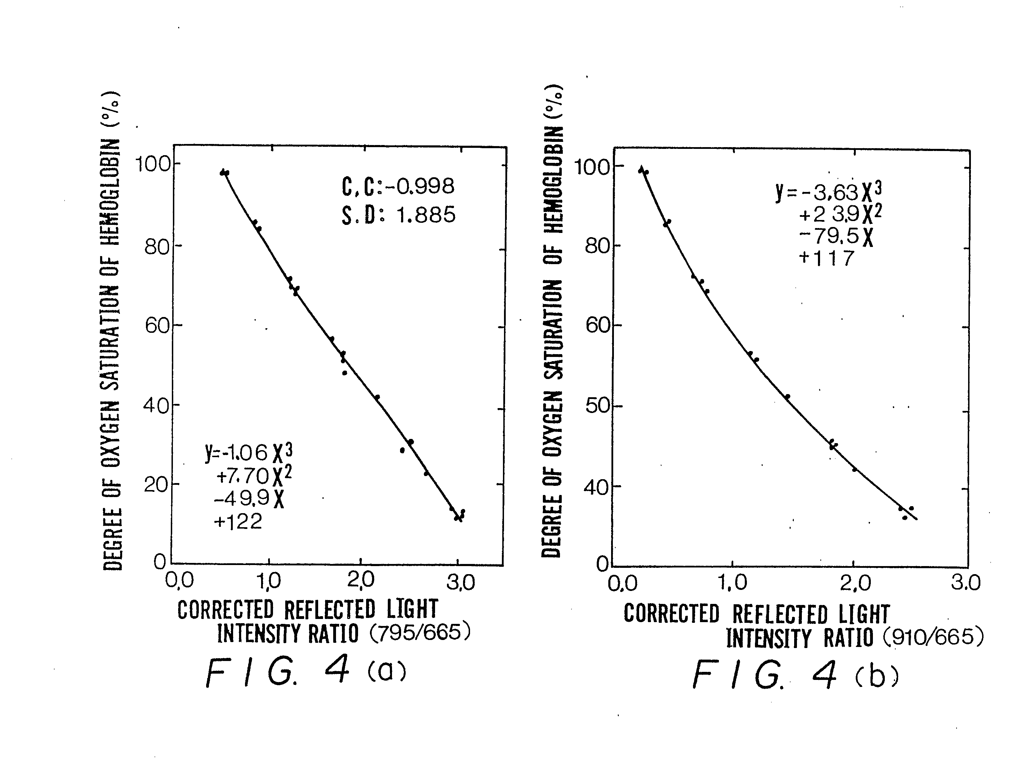

More specifically, Fig. 7 is a plot showing the relationship, already obtained as in vitro data, between the ratio of N reflected light intensities $I_1$ at the wavelength 665 nm and N reflected light intensities $I_2$ at the wavelength 795 nm and the degree of oxygen saturation of hemoglobin. Figs. 4(a) illustrates the relationship between the degree of oxygen saturation of hemoglobin and the ratio $[I_2/(I_1 + C)]$ following a correction based on a hematocrit correction constant C.

If we obtain a regression polynomial f(x) of degree three by performing a polynomial approximation using the method of least squares for relationships involving the abovementioned data sets, the variance in the data with respect to f(x) may be expressed in terms of a standard deviation S.D., as follows:

$$S.D. = \sqrt{\sum_i [f(x_i) - SO_{2i}]^2/(n-1)}$$
$$x_i = I_{2i}/(I_{1i}+C)$$

where $SO_2$ is the degree of saturation of oxygen and n represents the number of in vitro data sets.

Since the data sets are known and all are constant, S.D. can be considered to be a relationship between the coefficients of f(x) and a function of C. Furthermore, since f(x) is uniquely defined by the data sets, the coefficients thereof are also a function of C.

Therefore, we have

S.D. = $g_2(a_0, a_1, a_2, a_3, c)$

= $g_1[a_0(c), a_1(c), a_2(c), a_3(c), c]$

= $g(c)$

S.D. is thus expressed as a function of C. Accordingly, it will suffice to find the C that minimizes S.D. and use it as a correction value. In the above, $a_0$ -$a_3$ denote the coefficients of the regressive polynomial f(x) of degree three.

In accordance with the illustrated embodiments, a blood is irradiated with light having two different wavelengths, and the reflected light intensity of each wavelength is sensed. One electric signal representing the reflected light intensity of one wavelength is taken as a denominator, and another electric signal representing the reflected light intensity of the other wavelength is taken as a numerator. The degree of oxygen saturation in then determined using a ratio involving a signal obtained by adding a predetermined constant solely to the electric signal indicative of the denominator or to the electrical signals indicative of both the numerator and denominator. Therefore, if the relationship between the degree of oxygen saturation of hemoglobin and reflected light intensity is actually determined from the measured values for the wavelengths 665 nm and 795 nm, then a relationship of the kind shown in Fig. 4(a) will be obtained, wherein the influence of the hematocrit value is almost completely eliminated. This will make it possible to measure the degree of oxygen saturation virtually without the influence of the hematocrit value, thus providing measured values much more precise than those obtained in the prior art.

In the relationship shown in Fig. 4(a), 0.55 is actually added as the correction coefficient to the signal representing the reflected light intensity of wavelength 665 nm, and the ratio obtained involves this corrected value and the reflected light intensity of wavelength 795 nm. The standard deviation S.D. for the regression formula of order three based on this added correction value 0.55 is I.885. This correction value is one determined experimentally in such a manner that the standard deviation value will approach 0.

Figs. I(a), (b) are views illustrating the arrangement of a light-emitting source, irradiating means, light intensity sensing means, means for calculating the degree of oxygen saturation, and means for applying the aforementioned correction, all in accordance with a preferred embodiment of the invention.

The light-emitting source comprises three light-emitting diodes I1, I2, I3. A pulse generator I4 generates pulses of a predetermined pulse width at predetermined intervals in which the pulses do not overlap in time. These pulses are applied to the light-emitting diodes I1, I2, I3 through a driver circuit I5 and cause the diodes to alternately emit pulses of light.

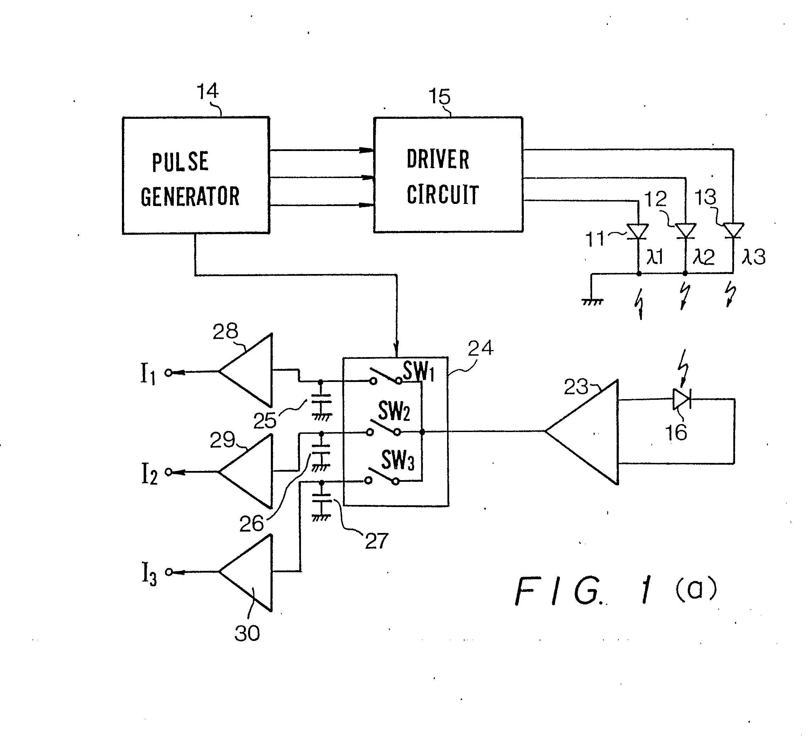

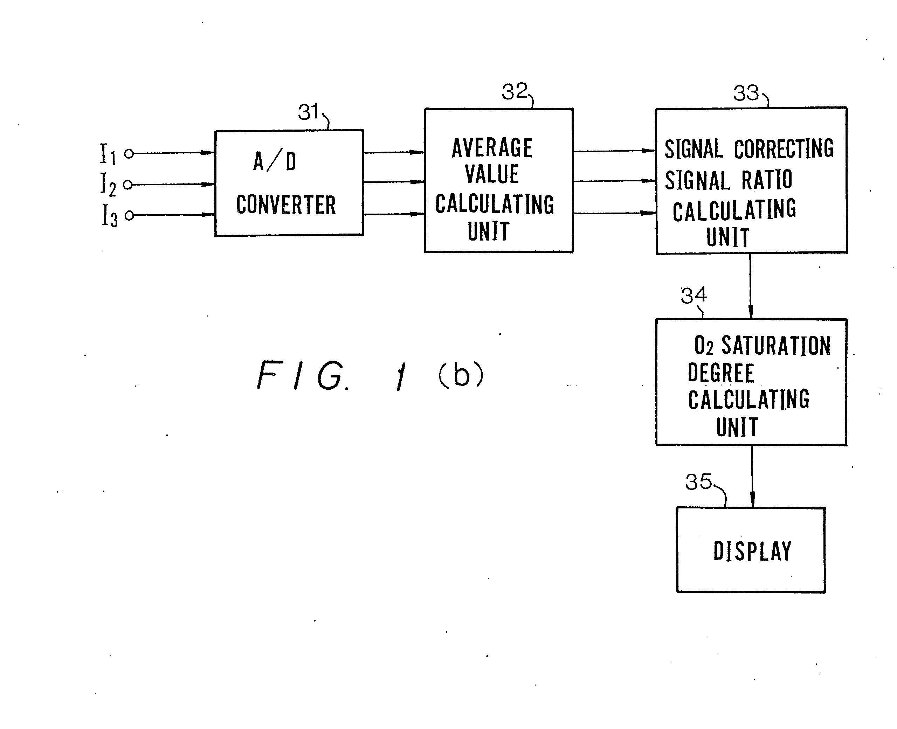

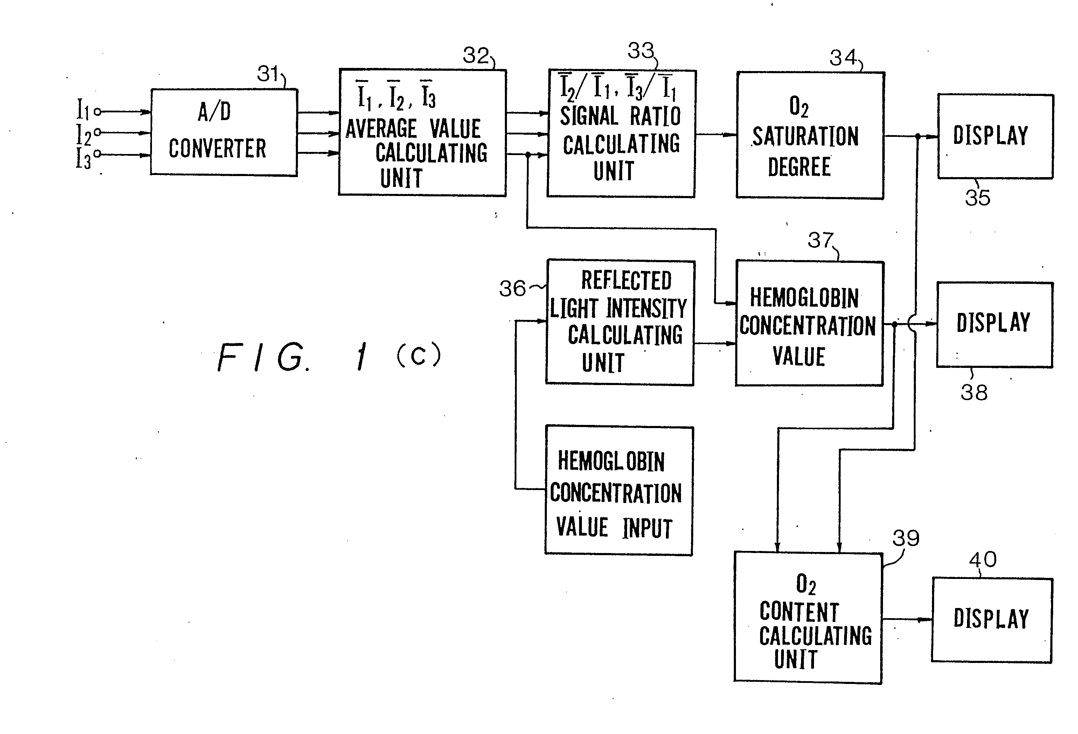

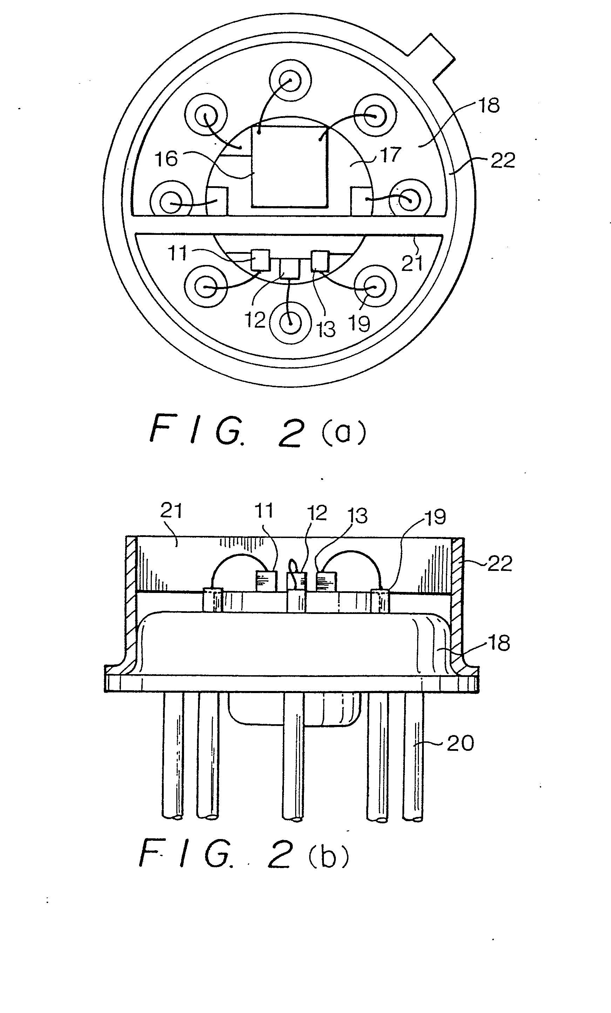

Fig. 2(a) is a top view and Fig. 2(b) a front view, partially shown in section, illustrating an embodiment of the irradiating means. The irradiating means includes a circular substrate I7 made of glass epoxy and having a copper foil pattern described on its surface. The substrate I7 is bonded securely on a TO-5 type header I8. The light-emitting diodes I1, I2, I3 and a photodiode I6 are affixed by an electrically conductive bonding agent to the copper foil on substrate I7 at positions where the center of the photodiode I6 is equidistant from the centers of the respective light-emitting diodes I1, I2, I3. Wire bonding is provided from a metal terminal I9 to the surface of a corresponding one of the light-emitting diodes I1, I2, I3 and photodiode I6, and the terminal I9 has a leg 20 to which the respective electrical connection is made. Secured between the photodiode I6 and the light-emitting diodes I1, I2, I3 is an optical insulating plate 21 having a height approximately the same as that of a cylinder 22, which is filled with a transparent resin for electrical insulation and internal protection. The surface of the transparent resin is highly polished and smooth so as not to loose its optical transmissivity and so as not to cause clotting of blood when brought into contact therewith.

The irradiating means is secured in a variety of housings in a state where only the light-emitting and light-receiving surface of the cylinder 22 is exposed and may then be used to measure the degree of oxygen saturation of hemoglobin, hemoglobin concentration and the degree of oxygen saturation of blood flowing through an extracorporeal circulating circuit or collected as a sample in a vessel.

As shown in Fig. I(a) and 2(a), light emitted from each of the light-emitting diodes I1, I2, I3 is absorbed and/or scattered by red blood cells. Some of the back-scattered light enters the photodiode I6. The aforementioned reflected light intensity sensing means comprises the photodiode I6 and an amplifier 23. The photodiode I6 generates an electric current commensurate with the intensity of the light signal incident thereon, and the current is converted into a voltage signal by the amplifier 23.

An analog switch 24, capacitors 25, 26, 27 and buffer amplifiers 28, 29, 30 constitute a circuit for splitting the voltage signal from amplifier 23 into signals corresponding to wavelengths of the light produced by the light-emitting diodes I1, I2, I3. The analog switch 24 has three switches SW1, SW2, SW3 opened and closed by a signal from the pulse generator I4. When the light-emitting diode I1 emits a light pulse, the pulse generator I4 applies a signal to the analog switch 24 to close only the switch SW1. This applies the output voltage signal of amplifier 23 to the capacitor 25, across which an average signal voltage is produced. This signal voltage represents the reflected light intensity of wavelength $\lambda_1$. This is light emitted from the diode I1, back-scattered by a blood and then received by the photodiode I6. The average signal voltage is outputted continuously through the buffer amplifier 28 and emerges as the reflected light intensity signal $I_1$.

The light-emitting diode I2, switch SW2 of analog switch 24, the capacitor 26 and buffer amplifier 29 combine to perform a similar operation, thereby outputting the reflected light intensity signal $I_2$ of wavelength $\lambda_2$, which is the wavelength of the light from light-emitting diode I2.

Likewise, the light-emitting diode I3, switch SW3 of analog switch 24, the capacitor 27 and buffer amplifier 30 cooperate to output the reflected light intensity signal $I_3$ of wavelength $\lambda_3$, which is the wavelength of the light from light-emitting diode I3.

As shown in Fig. I(b), these reflected light intensity signals $I_1$, $I_2$, $I_3$ of the respective wavelengths $\lambda_1$, $\lambda_2$, $\lambda_3$ are converted into digital signals by an analog/digital converter 31 before being applied to signal processing means.

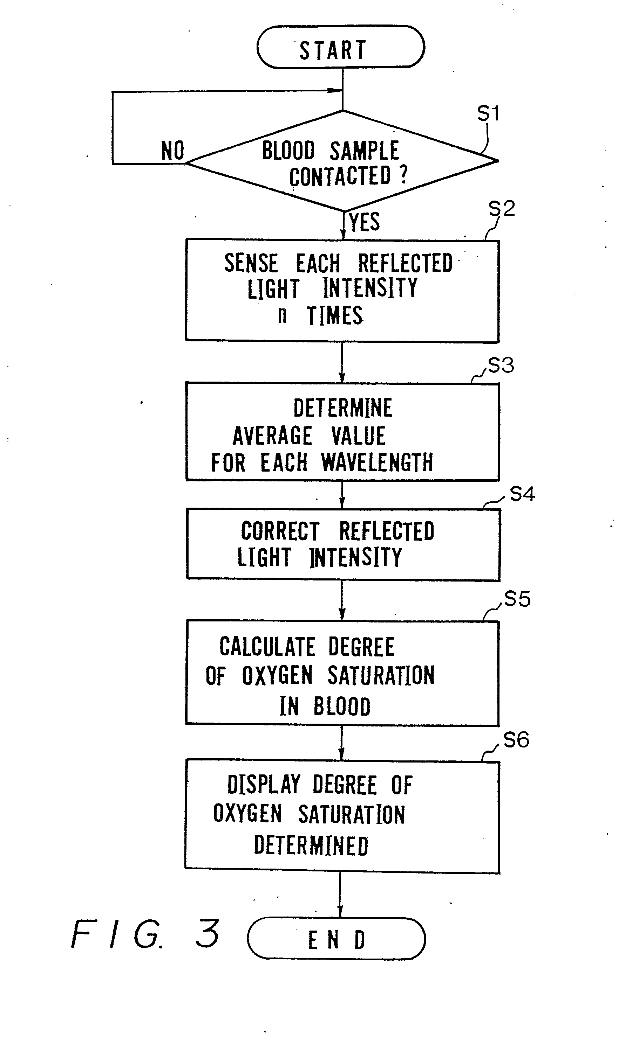

The operation of foregoing embodiment will now be described in accordance with the flowchart of Fig. 3.

A blood is brought into contact with the surface of the cylinder 22 at step SI of the flowchart. Next, at step S2, light from the light-emitting diodes I1, I2, I3 in the irradiating means of Figs. 2(a), (b) is absorbed and scattered by the red blood cells in the blood and some of back-scattered light enters the photodiode I6. As mentioned above, the light intensity sensing means comprises the photodiode I6 and amplifier 23. The photodiode I6 generates a current commensurate with the intensity of the light signal and the amplifier 23 converts the current into a voltage signal.

The circuit composed of the analog switch 24, capacitors 25, 26, 27 and buffer amplifiers 28, 29, 30 splits the voltage signal from amplifier 23 into the signals corresponding to the wavelengths of the light produced by the light-emitting diodes I1, I2, I3. The three switches SW1, SW2, SW3 of analog switch 24 are opened and closed by the signal from the pulse generator I4. When the light-emitting diode I1 emits a light pulse, the pulse generator I4 applies a signal to the analog switch 24 to close only the switch SW1. This

applies the output voltage signal of amplifier 23 to the capacitor 25, producing the average signal voltage representing the reflected light intensity of wavelength $\lambda_1$. This is light emitted from the diode 11, back-scattered in the blood and then received by the photodiode 16. The average signal voltage is outputted continuously through the buffer amplifier 28 and emerges as the reflected light intensity signal $I_1$.

The light-emitting diode 12, switch SW2 of analog switch 24, the capacitor 26 and buffer amplifier 29 combine to perform a similar operation, thereby outputting the reflected light intensity signal $I_2$ of wavelength $\lambda_2$, which is the wavelength of the light from light-emitting diode 12. Likewise, the light-emitting diode 13, switch SW3 of analog switch 24, the capacitor 27 and buffer amplifier 30 cooperate to output the reflected light intensity signal $I_3$ of wavelength $\lambda_3$, which is the wavelength of the light from light-emitting diode 13. These reflected light intensity signals $I_1$, $I_2$, $I_3$ of the respective wavelengths $\lambda_1$, $\lambda_2$, $\lambda_3$ are converted into digital signals by the analog/digital converter 31 before being applied to the signal processing means.

The processing for determining the reflected light intensities $I_1$ -$I_3$ is repeated a predetermined number of times (n times) to perform a predetermined number (n) of measurements.

The signal processing means includes an average value calculating unit 32, a signal correcting and signal ratio calculating unit 33, and an oxygen saturation degree calculating unit 34.

Next, at a step S3 in the flowchart of Fig. 3, the average value calculating unit 32 calculates the average of n signal values stored in a predetermined period of time, thereby determining the average values $\overline{I}_1$ , $\overline{I}_2$ , $\overline{I}_3$ of reflected light intensity. These average values $\overline{I}_1$ , $\overline{I}_2$ , $\overline{I}_3$ are outputted to the signal correcting and signal ratio calculating unit 33, which corrects them at step S4 by applying the previously stored constant C thereto. A ratio is then calculated at step S5 in accordance with the following formula:

$$\overline{I}_2 / (\overline{I}_1 + C)$$
or
$$\overline{I}_3 / (\overline{I}_1 + C)$$

where C = 0.55 in the present embodiment.

The results of these calculations are successively outputted to the oxygen saturation degree calculating unit 34. Stored in the latter is a functional equation or table indicating the correlation between degrees of oxygen saturation and reflected light intensity ratios The degree of oxygen saturation is calculated by substituting the output of the signal ratio calculating unit 33 into the functional equation (or table).

The value of oxygen saturation thus obtained is displayed on a display unit 35 at step S6. Any ·device which informs the operator of the measured value may serve as the display unit 35. Examples are a CRT, printer, liquid-crystal display, recorder or any other well-known means.

Fig. 4(b) is a plot showing the relationship between the degree of oxygen saturation of hemoglobin and reflected light intensity ratio based on the measured values, i.e. $\overline{I}_3 / (\overline{I}_1 + C)$, of reflected light intensity at the wavelengths 665 nm and 910 nm in accordance with the processing of the present invention. As in the relationship shown in Fig. 4(a) for the wavelengths 665 nm and 795 nm, it will be understood that the influence of the hematocrit value is almost completely eliminated. This makes it possible to measure the degree of oxygen saturation very accurately.

Though the illustrated embodiment employs three light-emitting sources, the invention is not limited to such an arrangement, for it is permissible to use e.g. a single light-emitting source capable of emitting light at different wavelengths.

The inventive method and apparatus for measuring the degree of saturation of oxygen in blood possess a number of important advantages.

(1) First, since the reflected light intensity signal at each wavelength is averaged over a predetermined period of time, there are fewer errors due a fluctuation in output caused by variations in power supply voltage, oscillation of the sensing unit and external noise.

(2) The degree of saturation of oxygen is found by using a signal ratio obtained by applying a predetermined constant to reflected light intensity signals at two different wavelengths. This virtually eliminates the influence of a variation in hematocrit value, thus making it possible to measure the degree of saturation of oxygen more accurately.

(3) Signal processing is very simple since it entails merely applying the predetermined constant to the signal outputs indicative of reflected light intensity. This enables the measurement apparatus to be simplified in structure and contributes to a reduction in cost.

An apparatus for measuring hemoglobin concentration and blood oxygen content will now be described, as well as the associated method.

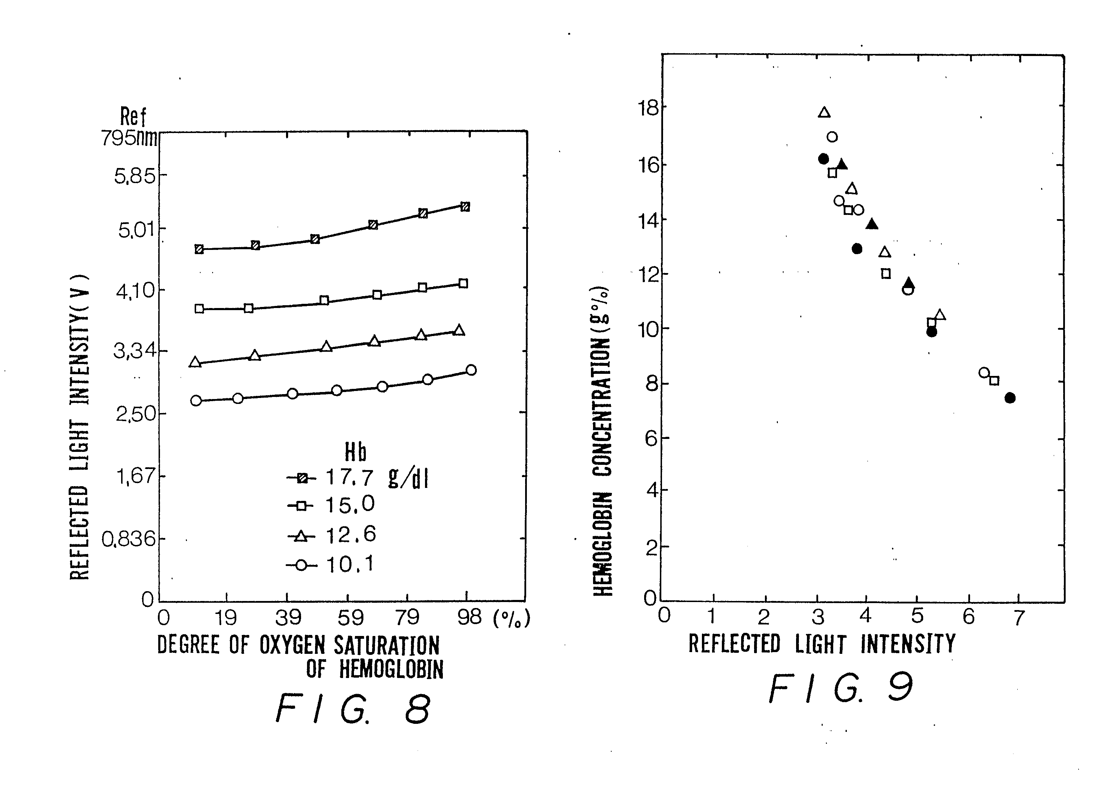

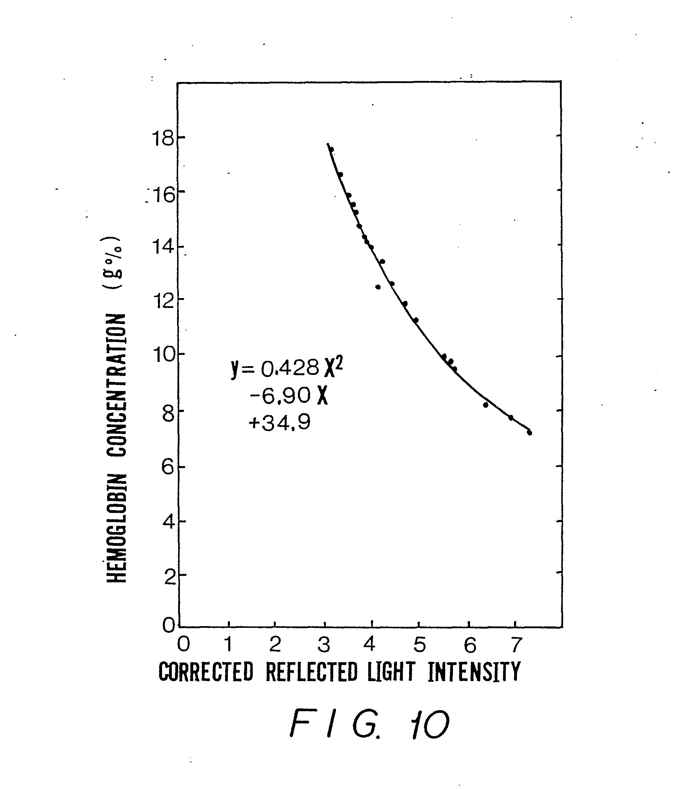

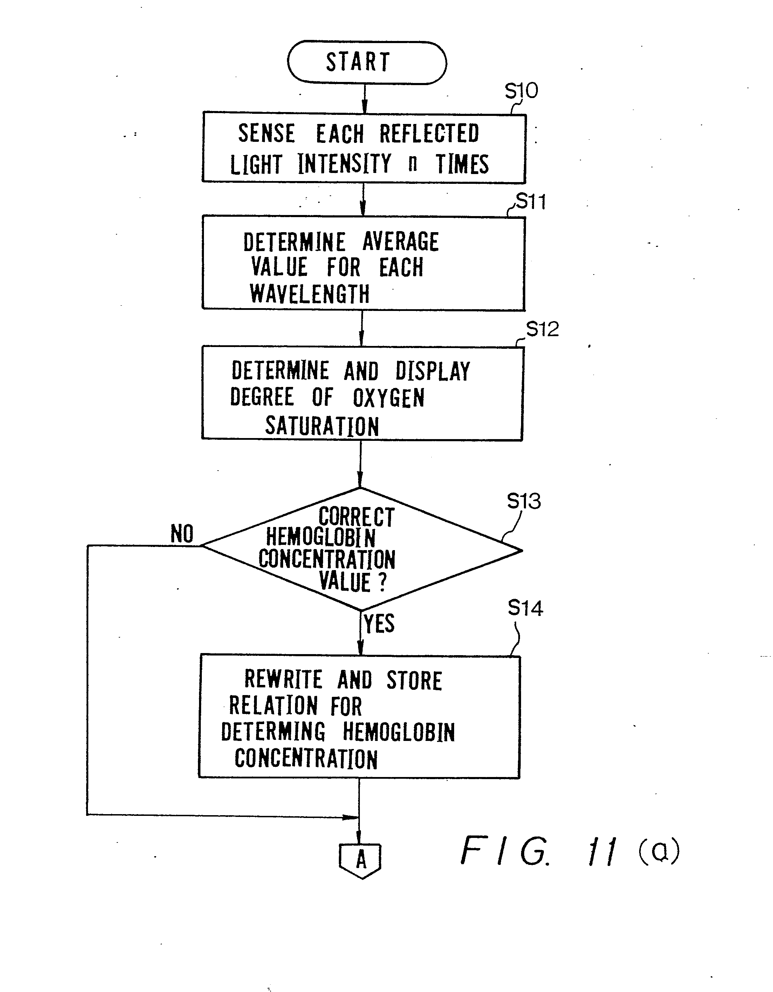

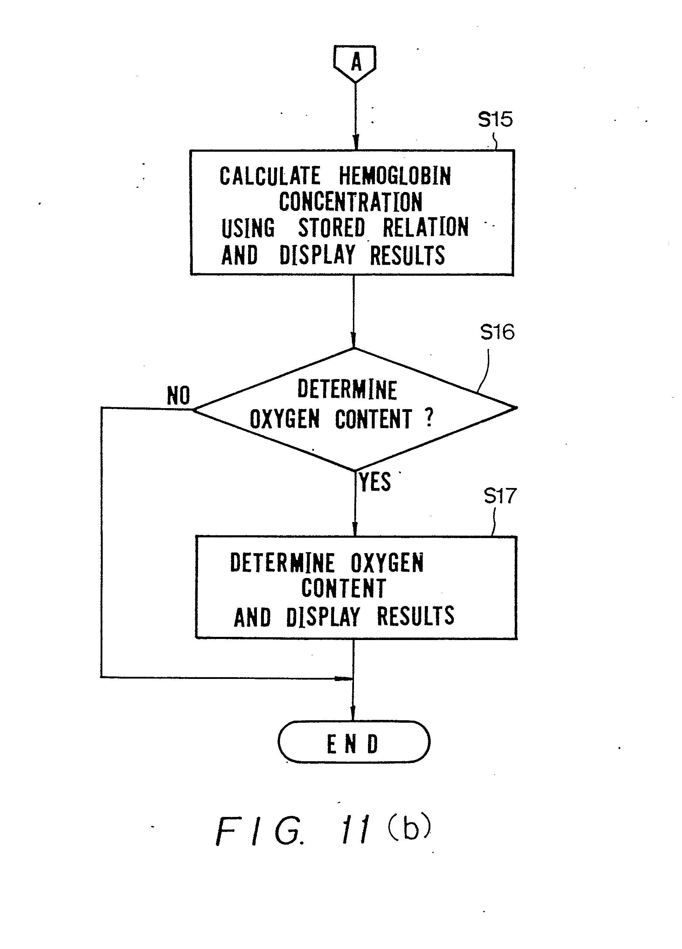

Fig. 8 is a plot showing the relationship between reflected light intensity for a wavelength of 795 nm and the degree of saturation of oxygen in hemoglobin while hemoglobin concentration is varied.

7

It will be understood from Figs. 4(a), 4(b) that the absorbancy of oxygenated hemoglobin (HbO₂) and that of reduced hemoglobin (Hbr) with respect to light at the wavelength of 795 nm are substantially the same. This means that the intensity of reflected light is virtually unaffected by a change in the degree of oxygen saturation and is a function of the concentration of hemoglobin.

Fig. 9 is a plot showing the relationship between hemoglobin concentration and reflected light intensity for a wavelength of 795 nm, with the degree of saturation of oxygen being held constant. The plot is the result of testing blood from four different individuals five times each. The plot indicates that reflected light intensity increases with a decrease in hemoglobin concentration. If a standard correlation function were to be prepared based on this relationship using curve recurrence, then it would be possible to determine hemoglobin concentration from a measurement of reflected light intensity.

In the case of Fig. 9, the maximum error exhibited by hemoglobin concentration obtained from a quadratic standard correlation function is about 11%. The reason for this is that the scattering of light by red blood cells differs slightly from one individual to the next. In order to raise precision, therefore, a correction should be made for the difference in scattering characteristics between individuals. This can be accomplished by measuring the intensity of light reflected from blood the hemoglobin concentration of which is known, obtaining a difference between the reflected light intensities from the aforementioned standard correlation function, preparing a second standard correlation function by applying a correction to the first-mentioned standard correlation function in such a manner that the aformentioned difference becomes zero, and determining the hemoglobin concentration by using the second standard correlation function. The results of applying such a correction to Fig. 9 are shown in Fig. l0, where the maximum error is 6.5%. It is apparent that precision is improved by applying the correction.

When preparing the aformentioned standard correlation function, a standard correlation function corrected for the degree of saturation of oxygen can be prepared in order to raise precision further. In such case, a known method can be used which entails measuring reflected light intensity at one other wavelength different from the wavelength used for measuring hemoglobin concentration, calculating the ratio of the reflected light intensities at these wavelengths and then determining the degree of saturation of oxygen.

It should be noted that these measurements of reflected light intensity in Figs. 8 and 9 are results obtained upon previously calibrating each reflected light intensity to a predetermined value using a white reflector.

As set forth above, the method of the invention is such that hemoglobin concentration is measured by utilizing the light absorption (reflection) characteristic of hemoglobin in blood. Hemolysis of the blood and a cuvette are not required. Accordingly, the method can be practiced in vivo as well as in a continuous manner.

Fig. l(c) illustrates an embodiment of an apparatus according to the invention for measuring hemoglobin concentration and blood oxygen content. The reflected light intensity signals $I_1$ -$I_3$ are received from the light sensing means of Fig. l(a).

The signal processing means in Fig. l(c) comprises signal processing means associated with the degree of saturation of oxygen, signal processing means associated with hemoglobin concentration, and signal processing means associated with oxygen content. The output signals for the three wavelengths are obtained from the analog/digital converter 3l and inputted to the average value calculating unit 32, which repeats a cycle of calculating and outputting the average of n signal values stored in a predetermined period of time. The outputs of the average value calculating unit 32 are inputted to the signal processing means for the degree of oxygen saturation and the signal processing means for hemoglobin concentration.

The signal processing means for the degree of oxygen saturation is constituted by the signal ratio calculating unit 33 and oxygen blood saturation degree calculating unit 34. The signal ratio calculating unit 33 selects two of the average values $\overline{I_1}$ , $\overline{I_2}$ , $\overline{I_3}$ of reflected light intensity and outputs the ratio of the two selected values, e.g. $\overline{I_2}$ / $\overline{I_1}$ or $\overline{I_3}$ / $\overline{I_1}$ . The ratios obtained are successively outputted to the oxygen saturation calculating unit 34. The latter stores a functional equation expressing the relationship between the degree of oxygen saturation and the reflected light intensity ratio. The degree of oxygen saturation is calculated by substituting the output of the signal ratio calculating unit 33 into the functional equation. The degree of oxygen saturation thus obtained is displayed on the display unit 35.

The signal processing means for hemoblobin concentration comprises a reflected light intensity calculating unit 36, and a hemoglobin concentration calculating unit 37. The reflected light intensity calculating unit 36, to which hemoglobin concentration is applied as an input, is adapted to calculate and output reflected light intensity from the inputted hemoglobin concentration using a previously stored functional equation expressing the relationship between reflected light intensity and hemoglobin concentration.

The unit 37 for calculating hemoglobin concentration, which receives one of the plural outputs of averaged reflected light intensity from the average value calculating unit 32 as well as the output of the reflected light intensity calculating unit 36, is adapted to correct a previously stored relation between reflected light intensity and hemoglobin concentration in such a manner that the difference between the two received outputs becomes zero. The unit 37 uses the corrected function to calculate hemoglobin concentration and outputs a signal indicative of the same to a display unit 38, whereby the calculated hemoglobin concentration is displayed.

It should be noted that the functional equation used by the hemoglobin concentration calculating unit 37 in the illustrated embodiment is

$$Hb(g\%) = 0.445R^2 - 7.l4R + 35.7 \ldots (2)$$

where R represents reflected light intensity for a wavelength of 795 nm.

Accordingly, the functional equation used in the reflected light intensity calculating unit 36 is such that reflected light intensity is obtained from hemoglobin concentration in accordance with a function which is the inverse of the functional equation (2).

The signal processing means for oxygen content is constituted by an oxygen content calculating unit 39. The latter calculates oxygen content in approximate fashion in accordance with the following equation using the outputs of the oxygen saturation degree calculating unit 34 and hemoglobin concentration calculating unit 37:

Oxygen content $(cO_2) = 1.34$ (ml) $^{\times} sO_2 \, ^{\times} Hb$ (g/dl)

The oxygen content calculated is displayed on a display unit 40.

Figs. ll(a), (b) show a flowchart illustrating a procedure for determining hemoglobin concentration and blood oxygen content in accordance with an embodiment of the invention. This flowchart will now be described.

In step Sl0 of the flowchart, the irradiating means shown in Figs. 2(a), (b) irradiates blood with light by successively driving the light-emitting diodes, and the intensity of light reflected from the blood is measured n times. This is followed by step Sll, at which the average value of the reflected light intensities for each wavelength of light from the respective light-emitting diode is determined. The degree of oxygen saturation is then determined at step Sl2 by executing the processing described above in connection with the flowchart of Fig. 3, and the degree of oxygen saturation is displayed by the display unit 35. In order to obtain the hemoglobin concentration, it is decided at step Sl3 whether to correct the relation, stored previously in the reflected light intensity computing unit 36, between hemoglobin concentration and reflected light intensity. If the correction is to made, the program proceeds to step Sl4, where the relation is corrected, as well as stored, by using the difference between the average value of light intensity, reflected from blood of the known hemoglobin concentration, already determined at step Sll, and the calculated value of reflected light intensity for the known hemoglobin concentration, which value is calculated from the inverse function of the relation stored in the reflected light intensity calculating unit 36. This is followed by step Sl5, at which at least one of the average values of reflected light intensity obtained at step Sll is used to calculate hemoglobin concentration in accordance with the relation stored in the reflected light intensity calculating unit 36. The calculated hemoglobin concentration is displayed by the display unit 38.

If the decision at step Sl3 is that the relation is not to be corrected, the program proceeds to step Sl5, whereby the relation already stored in the reflected light intensity calculating unit 36 is used to calculate the hemoglobin concentration, which is then displayed.

Next, it is decided at step Sl6 whether oxygen content is to be determined. If not, processing is ended. If oxygen content is to be determined, the program proceeds to step Sl7, at which oxygen content is obtained from the degree of oxygen saturation determined at step Sl2 and the hemoglobin concentration obtained at step Sl5. The oxygen content is displayed by the display unit 40. This is followed by the end of processing.

In accordance with the above aspect of the invention, both hemoglobin concentration and oxygen content can be accurately measured. In particular, the calculation and measurement of oxygen content can be performed automatically. This reduces labor and is clinically advantageous.

Another advantage of the invention is that the degree of saturation of oxygen and the concentration of hemoglobin can be measured by simple signal processing merely through use of a plurality of wavelengths.

According to the invention, neither a device for hemolyzing blood nor a cuvette are unnecessary. This enables the apparatus to be simplified, reduced in size and lowered in price by reducing manufacturing costs. The fact that blood hemolysis and a cuvette are unnecessary makes both in vitro and in vivo measurement possible and enables measurements to be taken continuously.

Further, according to the invention, blood having a known hemoglobin concentration is used to correct for an individual difference in scattering characteristics by effecting one-point calibration. This has the advantage of simplifying signal processing.

As many apparently widely different embodiments of the present invention can be made without departing from the spirit and scope thereof, it is to be understood that the invention is not limited to the specific embodiments thereof except as defined in the appended claims.

**Claims**

1. An apparatus for measuring the degree of saturation of oxygen in blood, comprising:

a light-emitting source for emitting light having at least two different wavelengths;

light intensity sensing means for irradiating a blood with the light of each different wavelength from said light-emitting source, and for sensing the intensities of light, which correspond to said wavelengths, reflected from the blood;

calculating means for calculating an average value of each reflected light intensity sensed by said light intensity sensing means;

first arithmetic means for selecting at least two of the average values and for determining the ratio thereof;

correcting means for correcting said ratio on the basis of a correction value obtained from a relation between a reflected light intensity ratio of blood having a known degree of oxygen saturation and said degree of oxygen saturation; and

second arithmetic means for determining a degree of saturation of oxygen in the blood from the corrected ratio.

2. The apparatus according to claim 1, wherein said correcting means corrects the ratio, in such a manner as to reduce the influence of a hematocrit value, by adding the correction value to at least one of any of the average values selected from among the average values of the reflected light intensities in order to obtain the ratio.

3. The apparatus according to claim 2, wherein the correction value added by said correcting means is a value which minimizes a standard deviation value between the degree of oxygen saturation calculated from the reflected light intensity ratio of blood having the known degree of oxygen saturation and said known degree of oxygen saturation.

4. The apparatus according to claim 1, wherein said second arithmetic means incorporates an arithmetic relation derived from a relationship between a reflected light intensity ratio, for different wavelengths, of blood having a known degree of oxygen saturation and said degree of oxygen saturation, and uses said arithmetic relation to determine the degree of saturation of oxygen from the reflected light intensity ratio of the blood.

5. The apparatus according to claim 1, wherein said light-emitting source emits light having at least a wavelength absorbed equally by oxygenated hemoglobin and reduced hemoglobin.

6. The apparatus according to claim 1, wherein said light-emitting source emits light at least having wavelengths of 665 nm, 795 nm and 910 nm.

7. The apparatus according to claim 3, wherein the correction value is 0.55.

8. A method of measuring the degree of saturation of oxygen in blood, comprising the steps of:

(a) irradiating a blood with light from a light-emitting source having at least two different wavelengths;

(b) sensing the intensities of light, which correspond to said wavelengths, reflected from the irradiated blood;

(c) calculating an average value of each reflected light intensity sensed;

(d) selecting at least two of the average values and determining the ratio thereof;

(e) correcting said ratio on the basis of a correction value obtained from a relation between a reflected light intensity ratio of blood having a known degree of oxygen saturation and said degree of oxygen saturation; and

(f) determining a degree of saturation of oxygen in the blood from the corrected ratio.

9. The method according to claim 8, wherein said step (e) comprises making the correction, in such a manner as to reduce the influence of a hematocrit value, by adding the correction value to at least one of any of the average values selected from among the average values of the reflected light intensities in order to obtain the ratio, said correction value being predetermined so as to minimize a standard deviation value between the degree of oxygen saturation calculated from the reflected light intensity ratio of blood having the known degree of oxygen saturation and said known degree of oxygen saturation.

10. The method according to claim 8, wherein said step (f) comprises determining the degree of saturation of oxygen from the reflected light intensity ratio of the blood by using an arithmetic relation derived from a relationship between a reflected light intensity ratio, for different wavelengths, of blood having a known degree of oxygen saturation and said degree of oxygen saturation.

11. The method according to claim 8, wherein said light-emitting source emits light at least having wavelengths absorbed equally by oxygenated hemoglobin and reduced hemoglobin.

12. The method according to claim 8, wherein said light-emitting source emits light at least having wavelengths of 665 nm and 795 nm or 665 nm and 910 nm.

13. The method according to claim 9, wherein the correction value is 0.55.

14. An apparatus for measuring hemoglobin concentration, comprising

a light-emitting source for emitting light having a predetermined wavelength;

light intensity sensing means for irradiating a blood with the light of the predetermined wavelength and for sensing the intensity of light reflected from the blood; and

concentration calculating means for calculating hemoglobin concentration from said intensity of reflected light.

15. The apparatus according to claim 14, wherein said concentration calculating means incorporates an arithmetic relation derived from a relationship between intensity of light reflected from blood having a predetermined hemoglobin concentration and said predetermined hemoglobin concentration, and uses said arithmetic relation to determine the hemoglobin concentration from the intensity of light reflected from the blood.

16. The apparatus according to claim 15, wherein said concentration calculating means includes means for comparing an intensity of light reflected from blood having a known hemoglobin concentration and an intensity of reflected light calculated from said known hemoglobin concentration, and for producing a signal indicative of the difference between these two intensities, and means for correcting the arithmetic relation so as to minimizine said difference.

17. The apparatus according to claim 14, wherein said light intensity sensing means calculates an average value of the intensity of light reflected from the blood.

18. The apparatus according to claim 14, wherein said predetermined wavelength is absorbed equally by oxygenated hemoglobin and reduced hemoglobin.

19. A method of measuring hemoglobin·concentration, comprising the steps of:

(a) irradiating a blood with light from a light-emitting source for emitting light having a predetermined wavelength, and sensing the intensity of light reflected from the irradiated blood, and

(b) calculating hemoglobin concentration based on the intensity of light reflected from the blood on the basis of an arithmetic relation derived from a relationship between intensity of light reflected from blood having a predetermined hemoglobin concentration and said predetermined hemoglobin concentration.

20. The method according to claim 19, wherein said step (b) comprises steps of comparing an intensity of light reflected from a blood having a known hemoglobin concentration and an intensity of reflected light calculated from said known hemoglobin concentration, and correcting the arithmetic relation so as to minimize a difference between the two intensities.

21. The method according to claim 19, wherein said predetermined wavelength is absorbed equally by oxygenated hemoglobin and reduced hemoglobin.

22. An apparatus for measuring blood oxygen content, comprising:

a light-emitting source for emitting light having at least two different wavelengths;

light intensity sensing means for irradiating a blood with the light of each different wavelength from said light-emitting source, and for sensing the intensities of light, which correspond to said wavelengths, reflected from the blood;

calculating means for calculating an average value of each reflected light intensity sensed by said light intensity sensing means;

first arithmetic means for selecting at least two of the average values and for determining the ratio thereof;

correcting means for correcting said ratio on the basis of a correction value obtained from a relation between a reflected light intensity ratio of blood having a known degree of oxygen saturation and said degree of oxygen saturation;

means for determining a degree of oxygen saturation of hemoglobin in the blood on the basis of the corrected ratio;

concentration calculating means for calculating hemoglobin concentration from one of said average values or reflected light intensities; and

means for determining blood oxygen content from said degree of blood saturation of hemoglobin and said hemoglobin concentration.

23. The apparatus according to claim 22, wherein said correcting means corrects the ratio, in such a manner as to reduce the influence of a hematocrit value, by adding the correction value to at least one of any of the average values selected from among the average values of the reflected light intensities in order to obtain the ratio.

24. The apparatus according to claim 23, wherein the correction value added by said correcting means is a value which minimizes a standard deviation value between the degree of oxygen saturation calculated from the reflected light intensity ratio of blood having the known degree of oxygen saturation and said known degree of oxygen saturation.

25. The apparatus according to claim 22, wherein said concentration calculating means incorporates an arithmetic relation derived from a relationship between intensity of light reflected from blood having a known hemoglobin concentration and said known hemoglobin concentration, and uses said arithmetic relation to determine the hemoglobin concentration from the average values of the intensity of light reflected from the blood.

26. The apparatus according to claim 25, wherein said concentration calculating means includes means for comparing an intensity of light reflected from blood having a known hemoglobin concentration and an intensity of reflected light calculated from said known hemoglobin concentration, and for producing a signal indicative of the difference between these two intensities, and means for correcting the arithmetic relation so as to minimizine said difference.

27. The apparatus according to claim 22, wherein said light-emitting source emits light having at least a wavelength absorbed equally by oxygenated hemoglobin and reduced hemoglobin.

28. A method of measuring blood oxygen content, comprising the steps of:

(a) irradiating a blood with light from a light-emitting source having at least two different wavelengths;

(b) sensing the intensities of light, which correspond to said wavelengths, reflected from the irradiated blood;

(c) calculating an average value of each reflected light intensity sensed;

(d) selecting at least two of the average values and determining the ratio thereof;

(e) correcting said ratio on the basis of a correction value obtained from a relation between a reflected light intensity ratio of blood having a known degree of oxygen saturation and said degree of oxygen saturation;

(e) determining a degree of oxygen saturation of hemoglobin in the blood on the basis of the corrected ratio;

(f) selecting one of said average values or reflected light intensities and calculating hemoglobin concentration based thereon; and

(g) determining the oxygen content of the blood from said degree of blood saturation of hemoglobin and said hemoglobin concentration.

29. The method according to claim 28, wherein said step (e) comprises making the correction, in such a manner as to reduce the influence of a hematocrit value, by adding the correction value to at least one of any of the average values selected from among the average values of the reflected light intensities in order to obtain the ratio, said correction value being predetermined so as to minimize a standard deviation value between the degree of oxygen saturation calculated from the reflected light intensity ratio of blood having the known degree of oxygen saturation and said known degree of oxygen saturation.

30. The method according to claim 28, wherein said step (f) comprises determining hemoglobin concentration from the intensity of light reflected from the blood by using an arithmetic relation derived from a relationship between intensity of light reflected from blood having a known hemoglobin concentration and said known hemoglobin concentration.

31. The method according to claim 30, wherein said step (f) comprises steps of comparing an intensity of light reflected from a blood having a predetermined hemoglobin concentration and an intensity of reflected light calculated from said predetermined hemoglobin concentration, and correcting the arithmetic relation so as to minimize a difference between the two intensities.

32. The method according to claim 28, wherein said light-emitting source emits light having at least a wavelength absorbed equally by oxygenated hemoglobin and reduced hemoglobin.

33. The method according to claim 29, wherein the correction value is 0.55.

FIG. 1 (a)

*FIG. 1* (b)

$FIG. \ 1$ (c)

F I G. 2 (a)

F I G. 2 (b)

```
                    ┌──────────────┐
                    │    START     │
                    └──────┬───────┘
                           │
         ┌─────────────────┤
         │                 ▼              S1
         │          ╱ ╲
   NO    │      ╱         ╲
   ───────┤  ╱  BLOOD SAMPLE  ╲
         ╲   CONTACTED ?    ╱
             ╲         ╱
                ╲   ╱
                 │ YES                    S2
                 ▼
        ┌──────────────────────┐
        │  SENSE  EACH  REFLECTED │
        │  LIGHT  INTENSITY       │
        │     n  TIMES            │
        └──────────┬─────────────┘
                   │                      S3
                   ▼
        ┌──────────────────────┐
        │      DETERMINE        │
        │   AVERAGE  VALUE      │
        │  FOR EACH WAVELENGTH  │
        └──────────┬───────────┘
                   │                      S4
                   ▼
        ┌──────────────────────┐
        │  CORRECT  REFLECTED   │
        │  LIGHT  INTENSITY     │
        └──────────┬───────────┘
                   │                      S5
                   ▼
        ┌──────────────────────┐
        │  CALCULATE DEGREE     │
        │  OF  OXYGEN SATURATION│
        │     IN BLOOD          │
        └──────────┬───────────┘
                   │                      S6
                   ▼
        ┌──────────────────────┐
        │  DISPLAY DEGREE OF    │
        │  OXYGEN SATURATION    │
        │    DETERMINED         │
        └──────────┬───────────┘
                   │
                   ▼
             ┌──────────┐
             │   END    │
             └──────────┘
```

FIG. 3

$$y = -3.63 X^3 + 23.9 X^2 - 79.5 X + 117$$

DEGREE OF OXYGEN SATURATION OF HEMOGLOBIN (%)

CORRECTED REFLECTED LIGHT INTENSITY RATIO (910/665)

F I G. 4 (b)

C.C: -0.998
S.D: 1.885

$$y = -1.06 X^3 + 7.70 X^2 - 49.9 X + 122$$

DEGREE OF OXYGEN SATURATION OF HEMOGLOBIN (%)

CORRECTED REFLECTED LIGHT INTENSITY RATIO (795/665)

F I G. 4 (a)

FIG. 5 (a)

FIG. 5 (b)

FIG. 6 (a)

FIG. 6 (b)

0 240 742

FIG. 6(c)

PRIOR ART

FIG. 7

FIG. 8

FIG. 9

0 240 742

F I G. 10

```
                    ┌─────────────┐
                    │    START    │
                    └──────┬──────┘
                           │                    S10
            ┌──────────────▼──────────────┐
            │    SENSE  EACH  REFLECTED    │
            │   LIGHT  INTENSITY  n TIMES  │
            └──────────────┬──────────────┘
                           │                    S11
            ┌──────────────▼──────────────┐
            │     DETERMINE  AVERAGE       │
            │      VALUE  FOR  EACH        │
            │        WAVELENGTH            │
            └──────────────┬──────────────┘
                           │                    S12
            ┌──────────────▼──────────────┐
            │   DETERMINE  AND  DISPLAY    │
            │   DEGREE  OF  OXYGEN         │
            │        SATURATION           │
            └──────────────┬──────────────┘
                           │
                           ▼
                      ◇─────────◇            S13
             NO      CORRECT
            ◄──────  HEMOGLOBIN
                     CONCENTRATION
                      VALUE ?
                      ◇─────────◇
                           │ YES             S14
            ┌──────────────▼──────────────┐
            │    REWRITE  AND  STORE       │
            │     RELATION  FOR            │
            │   DETERMING  HEMOGLOBIN      │
            │     CONCENTRATION            │
            └──────────────┬──────────────┘
                           │
                           ▼
                         ⟨ A ⟩
```

*F I G.  11* (a)

```
          ┌───┐
          │ A │
          └─┬─┘
            │
            ▼
```

S15

CALCULATE HEMOGLOBIN
CONCENTRATION
USING STORED RELATION
AND DISPLAY RESULTS

S16

DETERMINE
OXYGEN CONTENT ?

NO

YES

S17

DETERMINE OXYGEN
CONTENT
AND DISPLAY RESULTS

END

FIG. 11 (b)